# EUROPÄISCHE PATENTANMELDUNG

(11) **EP 1 645 396 A2**
(43) Veröffentlichungstag der Anmeldung: **12.04.2006**
(21) Anmeldenummer: 05022060.7
(22) Anmeldetag: 10.10.2005
(51) Int. Cl.: B29C 47/68, B01D 35/12

(54) **Filtervorrichtung für eine Verarbeitungsanlage von thermoplastischem Kunststoff sowie Filterverfahren**

(30) Priorität: 11.10.2004 DE 102004049643
(71) Anmelder: Plastmachines International GmbH, 82275 Emmering (DE)
(72) Erfinder: Matthes, Gerhard, 82178 Puchheim (DE)

(57) **Zusammenfassung**

Es wird eine Filtervorrichtung für eine Verarbeitungsanlage von thermoplastischem Kunststoff bereitgestellt, mit
einem Gehäuse (4), das einen Einlaß (5), einen Auslaß (6) sowie eine Rückspülöffnung (7) aufweist und in dem eine einen ersten und einen zweiten Filterabschnitt (13, 14) aufweisende Filtereinheit (9) ausgebildet ist, der über den Einlaß (5) der zu filternde Kunststoff zuführbar ist und die den gefilterten Kunststoff in einen Filterbereich (11) abgibt, der mit dem Auslaß (6) verbindbar ist,
wobei in einem ersten Betriebszustand der Filtervorrichtung der Filterbereich (11) mit dem Auslaß (6) in Verbindung steht und ein Filterkanal ausgebildet ist, der sich vom Einlaß (5), durch den ersten Filterabschnitt (13) hindurch in den Filterbereich (11) und von dort bis zum Auslaß (6) erstreckt,
und wobei in einem zweiten Betriebszustand der Filtervorrichtung der Filterbereich (11) nicht mit dem Auslaß (6) in Verbindung steht und ein Rückspülkanal ausgebildet ist, der sich vom Einlaß (5), durch den zweiten Filterabschnitt (14) hindurch in den Filterbereich (11) und von dort durch den ersten Filterabschnitt (13) hindurch bis zur Rückspülöffnung (7) erstreck t.

## Beschreibung

Die vorliegende Erfindung betrifft eine Filtervorrichtung für eine Verarbeitungsanlage von thermoplastischem Kunststoff sowie ein Filterverfahren.

Bekannte Filtervorrichtungen weisen z.B. ein Gehäuse mit einem Einlaß, einem Auslaß und einer Filtereinheit mit einem scheibenförmigen oder zylinderförmigem Filterabschnitt auf, wobei sich der Filterkanal für den Kunststoff vom Einlaß, durch den Filterabschnitt hindurch bis zum Auslaß erstreckt. Der Filterabschnitt verschmutzt mit der Zeit und muß daher regelmäßig gereinigt werden, wozu er aus dem Gehäuse ausgebaut werden muß. Dies führt einerseits zu einer Unterbrechung der Produktion, da in dieser Zeit keine Filtrierung mehr möglich ist. Andererseits ist diese Reinigung arbeits- und kostenintensiv. Um die Produktionsunterbrechung zu vermeiden, ist es bekannt, die Filtervorrichtung mit zwei Filtereinheit auszubilden, so daß im normalen Betrieb der Kunststoff mittels beider Filtereinheiten gefiltert werden kann. Im Falle der Reinigung wird nur eine Filtereinheit ausgebaut und gereinigt. Die andere Filtereinheit wird weiter zur Produktion genutzt. Dadurch kann die Produktion zumindest mit verringerter Kapazität aufrecht erhalten werden. Die arbeits- und kostenintensive Reinigung bleibt jedoch immer noch bestehen.

Es ist Aufgabe der Erfindung eine Filtervorrichtung für eine Verarbeitungsanlage von thermoplastischem Kunststoff zur Verfügung zu stellen, mit der die Reinigung des Filterabschnitts schnell und kostengünstig durchgeführt werden kann. Ferner soll ein entsprechendes Filterverfahren vorgeschlagen werden.

Die Aufgabe wird gelöst durch eine Filtervorrichtung für eine Verarbeitungsanlage von thermoplastischem Kunststoff, mit einem Gehäuse, das einen Einlaß, einen Auslaß sowie eine Rückspülöffnung aufweist und in dem eine einen ersten und einen zweiten Filterabschnitt aufweisende Filtereinheit ausgebildet ist, der über den Einlaß der zu filternde Kunststoff zuführbar ist und die den gefilterten Kunststoff in einen Filterbereich abgibt, der mit dem Auslaß verbindbar ist,
wobei in einem ersten Betriebszustand der Filtervorrichtung der Filterbereich mit dem Auslaß in Verbindung steht und ein Filterkanal ausgebildet ist, der sich vom Einlaß, durch den ersten Filterabschnitt in den Filterbereich und von dort bis zum Auslaß erstreckt, und wobei in einem zweiten Betriebszustand der Filtervorrichtung der Filterbereich nicht mit dem Auslaß in Verbindung steht und ein Rückspülkanal ausgebildet ist, der sich vom Einlaß, durch den zweiten Filterabschnitt in den Filterbereich und von dort durch den ersten Filterabschnitt hindurch bis zur Rückspülöffnung erstreckt.

Mit dieser Filtervorrichtung ist es möglich, den ersten Filterabschnitt im zweiten Betriebszustand mittels einem Rückspülen zu reinigen, ohne den Filterabschnitt oder sonstige Teile der Filtereinheit ausbauen zu müssen. Ferner wird das Rückspülen selbst nur mit gefiltertem Kunststoff durchgeführt, so daß selbst nach dem Reinigen des ersten Filterabschnitts der Filterbereich nicht gereinigt werden muß. Daher läßt sich die erfindungsgemäße schnell und kostengünstig reinigen.

Gemäß einer bevorzugten Weiterbildung sind das Gehäuse und die Filtereinheit relativ zueinander bewegbar und kann mittels einer Relativbewegung zwischen dem Gehäuse und der Filtereinheit ein Wechsel zwischen dem ersten und dem zweiten Betriebszustand bewirkt werden. Damit wird eine einfache Art der Umschaltung zwischen den beiden Betriebszuständen bereitgestellt.

Bevorzugt ist zumindest einer der beiden Filterabschnitte hohlzylinderförmig ausgebildet ist. Dabei kann der Querschnitt des entsprechenden Filterabschnitts nicht nur eine Kreisringform, sonder auch jede andere Ringform aufweisen, wie z.B. oval, dreieckig, viereckig bzw. n-eckig, wobei n eine ganze Zahl größer als 4 ist. Damit läßt sich bei kompakter Bauform eine große Filterfläche realisieren.

Insbesondere liegt der Filterbereich zumindest teilweise innerhalb des ersten und/oder des zweiten Filterabschnitts, wodurch ein kompakter Aufbau der Filtervorrichtung ermöglicht wird.

Der erste Filterabschnitt der Filtereinheit kann einen hohlzylinderförmigen Trägerabschnitt, der in seiner Wandung eine Vielzahl von Durchgangslöchern aufweist, ein Siebgewebe mit einer Siebweite, die kleiner ist als die Größe der Durchgangslöcher, sowie eine Befestigungseinheit umfassen, wobei das Siebgewebe an der Außenseite der Wandung anliegt und mittels der Befestigungseinheit gegen die Wandung gedrückt wird. Mit diesem relativ einfach zu realisierenden Aufbau kann ein flexibles Siebgewebe eingesetzt werden, da dies während dem ersten Betriebszustand vom zu filternden Kunststoff gegen die Wandung gedrückt wird, die das Siebgewebe stützt, und während dem zweiten Betriebszustand von der Befestigungseinheit in Position gehalten wird.

Auch der zweite Filterabschnitt der Filtereinheit kann einen vom ersten Trägerabschnitt beabstandeten, zweiten hohlzylinderförmigen Trägerabschnitt, der in seiner Wandung eine Vielzahl von zweiten Durchgangslöchern aufweist, ein zweites Siebgewebe mit einer Siebweite, die kleiner ist als die Größe der zweiten Durchgangslöcher, sowie eine zweite Befestigungseinheit umfassen, wobei das zweite Siebgewebe an der Außenseite der Wandung des zweiten Trägerabschnitts anliegt und mittels der zweiten Befestigungseinheit gegen die Wandung gedrückt wird. Damit kann auch für den zweiten Filterabschnitt ein flexibles Siebgewebe eingesetzt werden. Insbesondere kann das gleich Siebgewebe wie für den ersten Filterabschnitt verwendet werden.

Insbesondere können beide Trägerabschnitte einstückig ausgebildet sein. Dadurch muß man bei der Herstellung die Ausrichtung der Trägerabschnitte nicht durchführen, was der Fall ist, wenn die beiden Trägerabschnitt auf separaten Bauteilen ausgebildet sind.

Die Filtervorrichtung kann eine Heizeinrichtung aufweisen, die die Filtereinheit auf einer vorbestimmten Temperatur hält (z.B. ein Temperaturwert im Bereich von 100-400°C, je nach verwendetem Kunststoff). Dadurch kann die Fließfähigkeit des Kunststoffes in der Filtervorrichtung sichergestellt werden.

Gemäß einer vorteilhaften Weiterbildung der Filtervorrichtung ist eine Steuereinheit vorgesehen, die während des Betriebs der Filtervorrichtung im ersten Betriebszustand laufend einen Betriebsparameter der Filtrierung erfaßt und in Abhängigkeit des Wertes des erfaßten Parameters eine Umschaltung in den zweiten Betriebszustand bewirkt. Dadurch ist eine automatische Reinigung des ersten Filterabschnittes möglich.

Bei einer besonders bevorzugten Ausgestaltung der erfindungsgemäßen Filtervorrichtung weist die Filtereinheit einen dritten und einen vierten Filterabschnitt sowie einen zweiten Filterbereich, der vom ersten Filterbereich getrennt und mit dem Auslaß verbindbar ist, auf,
wobei im ersten Betriebszustand der zweite Filterbereich mit dem Auslaß in Verbindung steht und ein zweiter Filterkanal ausgebildet ist, der sich vom Einlaß, durch den dritten Filterabschnitt hindurch in den zweiten Filterbereich und von dort bis zum Auslaß erstreckt,
wobei auch im zweiten Betriebszustand der zweite Filterkanal ausgebildet ist und
wobei in einem dritten Betriebszustand der zweite Filterbereich nicht mit dem Auslaß in Verbindung steht und ein zweiter Rückspülkanal ausgebildet ist, der sich vom Einlaß, durch den vierten Filterabschnitt hindurch in den zweiten Filterbereich hinein und von dort durch den dritten Filterabschnitt hindurch bis zur Rückspülöffnung erstreckt
und wobei im dritten Betriebszustand der Filterkanal ausgebildet ist, der sich vom Einlaß, durch den ersten Filterabschnitt hindurch in den Filterbereich und von dort bis zum Auslaß erstreckt.

Bei dieser Ausgestaltung ist eine kontinuierliche Filtrierung des Kunststoffes möglich, da während des zweiten und dritten Betriebszustandes der erste bzw. dritte Filterabschnitt rückgespült und der andere dieser beiden Filterabschnitte (der dritte bzw. erste Filterabschnitt) zur Filtrierung des Kunststoffes weiter verwendet werden kann.

Der erste und zweite Filterabschnitt sind bevorzugt mittels einem ersten Kolben und der dritte und vierte Filterabschnitt sind bevorzugt mittels einem zweiten Kolben realisiert, wobei die beiden Kolben in einer gemeinsamen Bohrung und zwei separaten Bohrungen verschiebbar angeordnet sind.

Die erfindungsgemäße Filtervorrichtung bzw. deren Weiterbildungen kann bei einer Verarbeitungsanlage von thermoplastischem Kunststoff eingesetzt werden, die eine Zuführeinheit und ein der Zuführeinheit nachgeschaltete Plastifizierungsaggregat umfaßt, wobei die Filtervorrichtung dem Plastifizierungsaggregat nachgeschaltet ist. Es wird somit eine Verarbeitungsanlage von thermoplastischem Kunststoff bereitgestellt, bei der die Reinigung der Filtervorrichtung schnell und kostengünstig durchgeführt werden kann.

Ferner wird ein Filterverfahren von thermoplastischem Kunststoff in einer Filtervorrichtung mit einem Gehäuse bereitgestellt, das einen Einlaß, einen Auslaß sowie eine Rückspülöffnung aufweist und in dem eine einen ersten und einen zweiten Filterabschnitt aufweisende Filtereinheit ausgebildet ist, wobei bei dem Filterverfahren
in einem ersten Betriebszustand der zu filternde Kunststoff in Filterrichtung durch den ersten Filterabschnitt hindurch in einen Filterbereich geführt und dadurch gefiltert wird und der gefilterte Kunststoff dem Auslaß zugeführt wird und
in einem zweiten Betriebszustand der zu filternde Kunststoff durch den zweiten Filterabschnitt hindurch in den Filterbereich geführt und dadurch gefiltert wird, der gefilterte Kunststoff dann entgegen der Filterrichtung durch den ersten Filterabschnitt geführt wird, um diesen rückzuspülen, und der so rückgespülten Kunststoff an die Rückspülöffnung abgegeben wird.

Mit dem erfindungsgemäßen Verfahren ist es möglich, die Filtervorrichtung schnell und kostengünstig zu reinigen.

Bevorzugt kann während dem ersten Betriebszustand laufend ein Betriebsparameter der Filtrierung erfaßt und in Abhängigkeit des Wertes des erfaßten Parameters in den zweiten Betriebszustand umgeschaltet werden. Damit ist ein automatisiertes Reinigen des Filterabschnittes möglich.

Die Erfindung wird nachfolgend unter Bezugnahme auf die Zeichnung beispielhalber noch näher erläutert. In der Zeichnung zeigt:
- Fig. 1: eine schematische Ansicht einer Verarbeitungsanlage von thermoplastischem Kunststoff mit einer erfindungsgemäßen Filtervorrichtung;
- Fig. 2: eine vergrößerte Ansicht der Filtervorrichtung von Fig. 1 in einem ersten Betriebszustand,
- Fig. 3: eine vergrößerte Ansicht der Filtervorrichtung von Fig. 1 in einem zweiten Betriebszustand;
- Fig. 4: eine vergrößerte Ansicht einer Weiterbildung der Filtervorrichtung von Fig. 1 in einem ersten Betriebszustand;
- Fig. 5: eine vergrößerte Ansicht einer Weiterbildung der Filtervorrichtung von Fig. 1 in einem zweiten Betriebszustand, und
- Fig. 6: eine vergrößerte Ansicht einer Weiterbildung der Filtervorrichtung von Fig. 1 in einem dritten Betriebszustand.

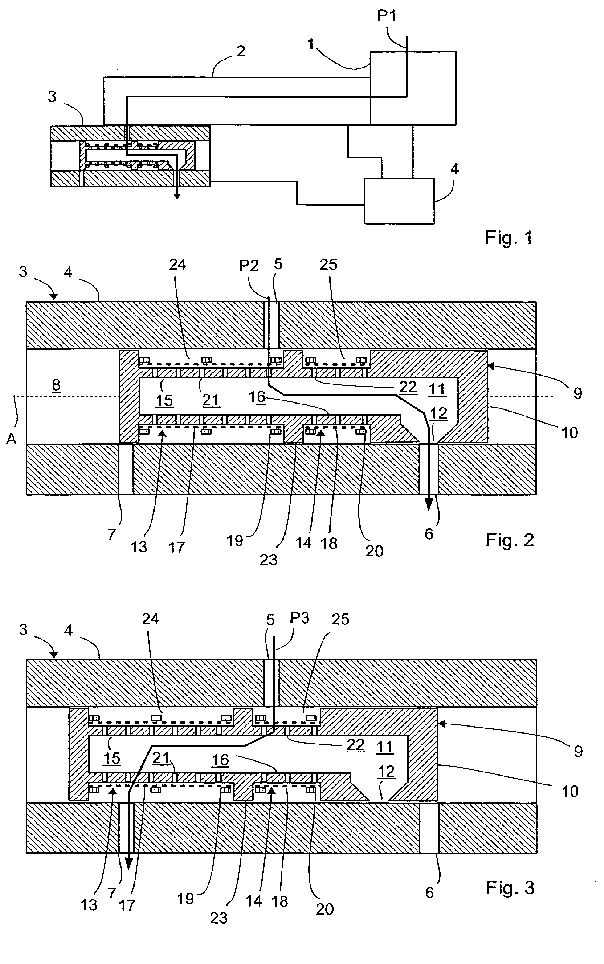

Wie in Fig. 1 gezeigt ist, umfaßt die Verarbeitungsanlage von thermoplastischem Kunststoff eine Zuführeinheit 1, ein Plastifizierungsaggregat 2, eine Filtervorrichtung 3 sowie eine Steuereinheit 4. Die Zuführeinheit 1 sorgt dafür, daß der zu verarbeitende Kunststoff dem Plastifizierungsaggregat 2 (z.B. ein Extruder) zugeführt wird, das den Kunststoff plastifiziert und in einen fließfähigen Zustand bringt und dann unter einem vorbestimmten Druck der Filtervorrichtung 3 zuführt, in der die gewünschte Filtrierung des Kunststoffes durchgeführt wird. Die Filtervorrichtung 3 gibt den gefilterten Kunststoff ab, der dann mit nachfolgenden Einheiten (nicht gezeigt) weiter verarbeitet werden kann (z.B. zu Granulat). Dieser Verfahrensablauf wird mittels der Steuereinheit gesteuert und ist in Fig. 1 durch den Pfeil P1 angedeutet.

Die Filtervorrichtung 3 umfaßt, wie insbesondere Fig. 2 und 3 zu entnehmen ist, ein Gehäuse 4, mit einem Einlaß 5, einem Auslaß 6, einer Rückspülöffnung 7 sowie einer Zylinderbohrung 8, eine Filtereinheit 9, die in die Zylinderbohrung 8 eingesetzt ist und entlang der Längsachse A der Zylinderbohrung 8 verschiebbar ist. Der Einlaß 5, der Auslaß 6 und die Rückspülöffnung 7 münden jeweils in der Zylinderbohrung 8.

Die Filtereinheit 9 weist einen Kolben 10 mit einem Innenraum 11 mit einer Kolbenöffnung 12 auf, die bei der in Fig. 2 gezeigten Kolbenstellung mit dem Auslaß 6 in Verbindung steht. Der maximale Außendurchmesser des Kolbens 10 ist so gewählt, daß der Kolben 10 entlang der Längsachse A der Zylinderbohrung 8 verschiebbar ist. Der Außendurchmesser des Kolbens 10 entsprich daher dem Innendurchmesser der Zylinderbohrung 8 bzw. ist etwas kleiner als der Innendurchm esser. Der Inn endurchm esser kann z.B. im Bereich von 5 cm bis zu 1 m liegen.

Der Kolben 10 umfaßt einen ersten und einen zweiten Filterabschnitt 13, 14, die jeweils aus einem Wandungsabschnitt 15, 16 des Kolbens, einem an der Außenseite des entsprechenden Wandungsabschn ittes 15, 16 angelegten Siebgewebe 17, 18 und einer Befestigungseinheit 19, 20, die das Siebgewebe 17, 18 gegen die Außenseite des Wandungsabschnitts 15, 16 drückt, gebildet sind.

Die Wandungsabschn itte 15, 16 weisen jeweils einen Außendurchm esser, der kleiner ist als der maximale Außendurchmesser des Kolbens 10, und sich radial erstreckende Durchgan gslöcher 21, 22 auf, die z.B. als Bohrungen oder Schlitze ausgebildet sind. Die axiale Ausd ehnung der Durchgangslöcher 21, 22 ist so gewählt, daß sie größer ist als die Siebweite des Siebgewebes 17, 18. Die Siebweite kann von einigen µm bis zu einigen hundert µm betragen, wohingegen die axiale Ausdehnung der Durchgangslöcher 21, 22 im Bereich von 1 mm bis zu 10 cm liegt. Das Siebgewebe ist bevorzugt aus Metall gebildet und kann mehrlagig ausgeführt sein, um die gewünschte Siebweite bereitzustellen.

Die Befestigungseinheiten 19, 20 können jeweils aus zwei Halbschalen gebildet sein, die mittels eines Verschlusses (z.B. Spannverschluß oder Verschraubu ng) miteinander verbunden werden und dadurch das Siebgewebe 17, 18 gegen die Außenseite der Wandungsabschn itte 15, 16 drücken und dort fixieren.

Die beiden Filterabschnitt 13, 14 sind durch einen ringförmigen Steg 23, dessen Außendurchmesser dem Innendurchmesser der Zylinderbohrung 8 entspricht, voneinander getrennt, so daß zwischen den beiden Filterabschnitten 13, 14 und der Innenseite der Zylinderbohrung 8 jeweils eine Vorkammer 24, 25 gebildet ist.

Der Kolben 10 ist zur Vereinfachung der Darstellung einstückig gezeigt. Jedoch ist bevorzugt das linke und/oder rechte Ende als separates Bauteil ausgeführt. Die beiden Wandungsabschnitte 15 und 16 und der Steg 23 sind bevorzugt einstückig ausgebildet, wobei auch hier ein Aufbau aus mehreren separaten Bauteilen möglich ist.

Bei dem in Fig.2 gezeigten ersten Betriebszustand der Filtervorrichtung 3 handelt es sich um den normalen Filterzustand, bei dem ein Filterkanal ausgebildet ist, der sich von dem Einlaß 5, in die Vorkammer 24, durch den ersten Filterabschnitt 13 hindurch in den Innenraum 11 hinein und von diesem durch die Kolbenöffnung 12 und den Auslaß 6 erstreckt. Zwischen der Rückspülöffnung 7 und der ersten Vorkammer 24 oder dem Innenraum 11 besteht keine Verbindung.

Wenn der zu filternde Kunststoff durch den Filterkanal strömt (wie durch den Pfeil P2 angedeutet ist), findet die Filtrierung am ersten Filterabschnitt 13 statt, der entlang einer Filterrichtung von außen nach innen durchströmt wird, so daß die herausgefilterten Verschmutzungen in der Vorkammer 24 verbleiben und im Innenraum 11 und allen nachfolgenden Abschnitten des Filterkanals nur der gefilterte Kunststoff vorhanden ist.

Wenn die Verschmutzung in der ersten Vorkammer 24 bzw. des ersten Filterabschnittes 13 so stark ist, daß eine Reinigung des ersten Filterabschnittes 13 notwendig wird, wird der Kolben 11 von der Position in Fig. 2 nach links relativ zum Gehäuse 4 zu der in Fig. 3 gezeigten Position bewegt. Dadurch ist ein zweiter Betriebszustand eingestellt, bei dem der erste Filterabschnitt 13 rückgespült werden kann, wobei zu Rückspülung ausschließlich gefilterter Kunststoff verwendet wird, so daß in den Innenraum 11 zu keiner Zeit ungefilterter und damit verschmutzter Kunststoff gelangen kann.

Beim zweiten Betriebszustand steht der Einlaß 5 mit der Vorkammer 25 des zweiten Filterabschnitts 14 in Verbindung, ist keine Verbindung zwischen dem Innenraum 11 und dem Auslaß 6 vorhanden und ist die Vorkammer 24 des ersten Filterabschnittes 13 mit der Rückspülöffnung 7 verbunden. Es ist daher ein Rückspülkanal ausgebildet, der sich vom Einlaß 5, in die zweite Vorkammer 25, durch den zweiten Filterabschnitt 14 in den Innenraum 11 (Filterbereich) hinein, von dort durch den ersten Filterabschnitt 13 hindurch in die erste Vorkammer 24 hinein und dann zur Rückspülöffnung 7 erstreckt. Somit wird der erste Filter-abschnitt 13 von innen nach außen (also gegen die Filterrichtung) mit dem bereits durch den zweiten Filterabschnitt 14 gefilterten Kunststoff durchströmt, so daß die Verunreinigungen des ersten Filterabschnittes 13 über die Rückspülöffnung herausgespült werden können (Pfeil P3).

Wenn die Reinigung des ersten Filterabschnitts 13 abgeschlossen ist, wird der Kolben 10 wieder in die in Fig. 2 gezeigte Betriebsstellung gebracht, und die gewünschte Filtrierung des Kunststoffes mittels des ersten Filterabschnitts 13 kann durchgeführt werden. Da auch während der Rückspülung ausschließlich gefilterter Kunststoff in den Innenraum 11 einströmt, ist keine Reinigung des Innenraums 11 notwendig und kann der normale Produktionsprozeß sofort weitergeführt werden.

Die Zeitpunkte, zu denen ein Wechsel zwischen den beiden in Fig. 2 und 3 gezeigten Betriebszuständen durchgeführt wird, kann automatisch erfaßt werden. So kann z.B. der bei zunehmender Verschmutzung ansteigende Druck, der notwendig ist, um den zu filternden Kunststoff durch die Filtervorrichtung 3 zu bringen, im Rahmen einer laufenden Druckmessung erfaßt und ausgewertet werden. Wenn ein voreingestellter Druck überschritten wird, kann dann beispielsweise der Wechsel in die Rückspülposition bewirkt werden. In gleicher Weise kann der m it zunehmender Reinigung abnehmende Druck dazu verwendet werden, um wieder automatisch in den Betriebszustand von Fig. 2 zu wechseln. Diese Steuerung kann vollautomatisch durch z.B. die Steuereinheit 4 bewirkt werden.

Natürlich kann auch jeder andere Parameter, aus dem sich der Verschmutzungsgrad des ersten Filterabschnitts 13 ableiten läßt, erfaßt und ausgewertet werden, um eine automatische Rückspülung (und somit eine automatische Reinigung) des ersten Filterabschnittes 13 durchzuführen. Eine Rückspülung kann ferner auch zeitgesteuert oder manuell ausgelöst und durchgeführt werden.

Die axiale Länge der beiden Filterabschnitte 13, 14 ist in dem hier beschriebenen Ausführungsbeispiel so gewählt, daß der erste Filterabschnitt 13 länger ist als der zweite Filterabschnitt 14. Dies ist deshalb so gewählt, da der zweite Filterabschnitt 14 deutlich kürzer zur Filtrierung (nur bei der Rückspülung benötigt) wird als der erste Filterabschnitt 13. Somit ist die Filterfläche des ersten Filterabschnitts 13 größer als die des Filterabschnitts 14. Natürlich können beide Filterflächen auch gleich groß bzw. kann die Filterfläche des Filterabschnitts 14 größer als die des ersten Filterabschnitts 13 sein.

Ferner kann der erste und/oder zweite Filterabschnitt 13, 14 mehrere Unterabschnitte (nicht gezeigt) aufweisen.

Bei der in oben beschriebenen Ausführungsform sind die Außendurchmesser der beiden Wandungsabschnitte 15 und 16 gleich groß. In der dadurch gebildeten zweiten Vorkammer 25 sammelt sich während dem normalen Filterbetrieb im Betriebszustand von Fig. 2 Kunststoffmaterial an, das dort während eines gesamten Filterzyklus verbleibt. Dies kann bei einigen, insbesondere wärmeempfindlichen Kunststoffen nachteilig dazu führen, daß der zweite Filterabschnitt 14 von diesem Material etwas zugesetzt wird.

Um dies zu verhindern, kann der Kolben 10 so ausgebildet werden, daß der Außendurchmesser des zweiten Wandungsabschnittes 16 so groß wie möglich gewählt wird, so daß die Größe der zweiten Vorkammer 25 minimiert wird. Damit läßt sich die Kunststoffmenge, die sich in der zweiten Vorkammer 25 während dem Filterbetrieb ansammelt, minimieren, so daß auch das Zusetzen des zweiten Filterabschnitts 14 minimiert ist.

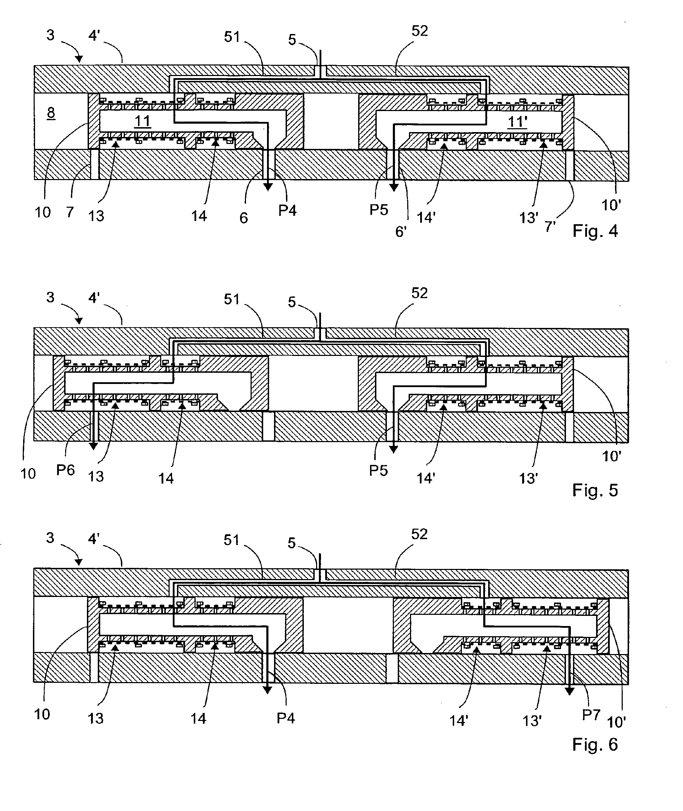

Bei den bisher beschrieben Ausführungsformen ist stets nur ein diskontinuierlich Filterbetrieb möglich, da während dem Rückspülen keine Filtrierung für die Produktion möglich ist. Um einen kontinuierlichen Filterbetrieb zu ermöglichen, kann in einer Weiterbildung die Filtereinheit z.B. zwei Kolben 10 und 10' in der Zylinderbohrung 8 aufweisen, wie dies in Fig. 4 gezeigt ist.

Die Kolben 10 und 10' in Fig. 4 entsprechen vom Aufbau jeweils dem Kolben 10 in Fig. 2, wobei der Kolben 10' lediglich um eine Achse senkrecht zur Längsrichtung der Zylinderbohrung 8 gespiegelt angeordnet ist. Zur Beschreibung der Kolben 10 und 10' wird daher auf die obige Beschreibung verwiesen. Der Kolben 10' weist in gleicher Weise wie der Kolben 10 einen Filterabschnitt 13' zur Filtrierung (dritter Filterabschnitt) und einen Filterabschn itt 14' zur Rückspülung (vierter Filterabschnitt) sowie einen Innenraum bzw. zweiten Filterbereich 11' auf.

Das Gehäuse 4' unterscheidet sich von dem Gehäuse 4 im wesentlichen nur dadurch, daß es länger ist, daß sich der Einlaß 5 in zwei Teilkanäle 51 und 52 aufteilt und daß für jeden der Kolben 10 und 10' ein Auslaß 6, 6' sowie eine Rückspülöffnung 7 und 7' vorgesehen sind.

Bei der in Fig. 4 gezeigten Filterstellung, wird der Kunststoff über die beiden ersten Filterabschnitte 13, 13' der beiden Kolben 10 und 10' gefiltert, wie durch die Pfeile P4 und P5 angedeutet ist.

In Fig. 5 ist der Betriebszustand gezeigt, bei dem der erste Kolben 10 rückgespült wird (Pfeil P6). Über den zweiten Kolben 10' wird jedoch noch für die Produktion der zugeführte Kunststoff gefiltert (Pfeil P5), so daß keine Unterbrechung der Produktion auftritt.

Entsprechendes gilt für den in Fig. 6 gezeigten Betriebszustand, bei dem der zweite Kolben 10' rückgespült wird (Pfeil P7), während über den ersten Kolben 10 die Produktion weiterläuft (Pfeil P4).

Bei der Ausführungsform von Fig. 4 - 6 kann somit während der Produktion die notwendige Reinigung der Filterabschnitte mittels einer Rückspülung durchgeführt werden, ohne daß es zu einer unerwünschten Unterbrechung der Produktion kommt.

Die Umschaltung zwischen den einzelnen Betriebszuständen erfolgt in gleicher Weise wie bei der Ausführungsform von Fig. 2 und 3 bevorzugt automatisch.

Natürlich können die beiden Kolben 10 und 10' nicht nur in einer einzigen Zylinderbohrung 8 angeordnet sein, wie dies in Fig. 3 - 5 gezeigt ist, sondern auch in zwei Zylinderbohrungen (nicht gezeigt), die sich bevorzugt parallel zueinander erstrecken. Damit läßt sich die Ausdehnung der Filtervorrichtung in Längsrichtung der Zylinderbohrung deutlich verkürzen. Ferner können die beiden Kolben 10 und 10' gleich ausgebildet sein (z.B. sind der erste und dritte Filterabschnitt jeweils links vom zweiten und vierten Filterabschnitt). Auch kann die benötigte Mechanik und Hydraulik zum Bewegen der Kolben nur an einer Seite (z.B. der linken Seite) ausgebildet werden, wodurch der Aufbau der gesamten Filtervorrichtung vereinfacht ist.

Bei allen beschriebenen Ausführungsformen können die Kolben 10, 10' in einem weiteren Betriebszustand zumindest soweit aus der Zylinderbohrungen herausbewegt werden, daß die Siebgewebe 17, 18 vom Kolben gelöst und gereinigt oder ausgetauscht werden können.

## Patentansprüche

1. Filtervorrichtung für eine Verarbeitun gsanlage von thermoplastischem Kunststoff, mit einem Gehäuse (4), das einen Einlaß (5), einen Auslaß (6) sowie eine Rückspülöffnung (7) aufweist und in dem eine einen ersten und einen zweiten Filterabschnitt (13, 14) aufweisende Filtereinheit (9) ausgebildet ist, der über den Einlaß (5) der zu filternde Kunststoff zuführbar ist und die den gefilterten Kunststoff in einen Filterbereich (11) abgibt, der mit dem Auslaß (6) verbindbar ist,
wobei in einem ersten Betriebszustand der Filtervorrichtung der Filterbereich (11) mit dem Auslaß (6) in Verbindung steht und ein Filterkanal ausgebildet ist, der sich vom Einlaß (5), durch den ersten Filterabschnitt (13) hindurch in den Filterbereich (11) und von dort bis zum
Auslaß (6) erstreckt,
und wobei in einem zweiten Betriebszustand der Filtervorrichtung der Filterbereich (11) nicht mit dem Auslaß (6) in Verbindung steht und ein Rückspülkanal ausgebildet ist, der sich vom Einlaß (5), durch den zweiten Filterabschnitt (14) hindurch in den Filterbereich (11) und von dort durch den ersten Filterabschnitt (13) hindurch bis zur Rückspülöffnung (7) erstreckt.

2. Filtervorrichtung nach Anspruch 1, bei der das Gehäuse (4) und die Filtereinheit (9) relativ zueinander bewegbar sind und mittels einer Relativbewegung zwischen dem Gehäuse (4) und der Filtereinheit (9) ein Wechsel zwischen dem ersten und dem zweiten Betriebszustand bewirkt werden kann.

3. Filtervorrichtung nach einem der obigen Ansprüche, bei der zumindest einer der beiden Filterabschnitte (1 3, 14) hohlzylinderförmig ausgebildet ist.

4. Filtervorrichtung nach einem der obigen Ansprüche, bei der der Filterbereich (11) zumindest teilweise innerhalb des ersten und/oder des zweiten Filterabschnitts (13, 14) liegt.

5. Filtervorrichtung nach einem der obigen Ansprüche, bei der der erste Filterabschnitt (13) der Filtereinheit (9) einen hohlzylinderförmigen Trägerabschnitt, der in seiner Wandung (15) eine Vielzahl von Durchgangslöchern (21) aufweist, ein Siebgewebe (17) mit einer Siebweite, die kleiner ist als die Größe der Durchgangslöcher (21), sowie eine Befestigungseinheit (19) umfaßt, wobei das Siebgewebe (17) an der Außenseite der Wandung (15) anliegt und mittels der Befestigungseinheit (19) gegen die Wandung (15) gedrückt wird.

6. Filtervorrichtung nach Anspruch 5, bei der der zweite Filterabschnitt (14) der Filtereinheit (9) einen vom ersten Trägerabschnitt beabstandeten, zweiten hohlzylinderförmigen Trägerabschnitt, der in seiner Wandung (16) eine Vielzahl von zweiten Durchgangslöchern (22) aufweist, ein zweites Siebgewebe (18) mit einer Siebweite, die kleiner ist als die Größe der zweiten Durchgangslöcher (22), sowie eine zweite Befestigungseinheit (20) umfaßt, wobei das zweite Siebgewebe (18) an der Außenseite der Wandung (16) des zweiten Trägerabschnitts anliegt und mittels der zweiten Befestigungseinheit (20) gegen die Wandung (16) gedrückt wird, wobei bevorzugt die beiden Trägerabschnitte einstückig ausgebildet sind.

7. Filtervorrichtung nach einem der obigen Ansprüche, bei der eine Heizeinrichtung vorgesehen ist, die die Filtereinheit (9) auf einer vorbestimmten Temperatur hält, und/oder bei der eine Steuereinheit (4) vorgesehen ist, die während des Betriebs der Filtervorrichtung im ersten Betriebszustand laufend einen Betriebsparameter der Filtrierung erfaßt und in Abhängigkeit des Wertes des erfaßten Parameters eine Umschaltung in den zweiten Betriebszustand bewirkt.

8. Filtervorrichtung nach einem der obigen Ansprüche, bei der die Filtereinheit (9) einen dritten und vierten Filterabschnitt sowie einen zweiten Filterbereich (11'), der vom ersten Filterbereich (11) getrennt und mit dem Auslaß (6') verbind bar ist, aufweist,
wobei im ersten Betriebszustand der zweite Filterbereich (11) mit dem Auslaß (6') in Verbindung steht und ein zweiter Filterkanal ausgebildet ist, der sich vom Einlaß (5), durch den dritten Filterabschnitt (13') hindurch in den zweiten Filterbereich (11') und von dort bis zum Auslaß (6') erstreckt,
wobei auch im zweiten Betriebszustand der zweite Filterkanal ausgebildet ist und
wobei in einem dritten Betriebszustand der zweite Filterbereich (11') nicht mit dem Auslaß (6') in Verbindung steht und ein zweiter Rückspülkanal ausgebildet ist, der sich vom Einlaß (5), durch den vierten Filterabschnitt (14') hindurch in den zweiten Filterbereich (11') und von dort durch den dritten Filterabschnitt (13') hindurch bis zur zweiten Rückspülöffnung (7') erstreckt und wobei im dritten Betriebszustand der Filterkanal ausgebildet ist, der sich vom Einlaß (5), durch den ersten Filterabschnitt (13) hindurch in den Filterbereich (11) und von dort bis zum Auslaß (6) erstreck t.

9. Verwendung der Filtervorrichtung nach einem der obigen Ansprüche bei einer Verarbeitungsanlage von thermoplastischem Kunststoff, die eine Zuführeinheit (1) und ein der Zuführeinheit (1) nachgeschaltetes Plastifizierungsaggregat (2) umfaßt, wobei die Filtervorrichtung (3) dem Plastifizierungsaggregat (2) nachgeschaltet ist.

10. Filterverfahren von thermoplastischem Kunststoff in einer Filtervorrichtung mit einem Gehäuse, das einen Einlaß, einen Auslaß sowie eine Rückspülöffnung aufweist und in dem eine einen ersten und einen zweiten Filterabschnitt aufweisende Filtereinheit ausgebildet ist,
wobei bei dem Filterverfahren
in einem ersten Betriebszustand der zu filternde Kunststoff in Filterrichtung durch den ersten Filterabschnitt hindurch in einen Filterbereich geführt und **dadurch** gefiltert wird und der gefilterte Kunststoff dem Auslaß zugeführt wird und
in einem zweiten Betriebszustand der zu filternde Kunststoff durch den zweiten Filterabschnitt hindurch in den Filterbereich geführt und **dadurch** gefiltert wird, der gefilterte Kunststoff dann entgegen der Filterrichtung durch den ersten Filterabschnitt geführt wird, um diesen rückzuspülen, und der so rückgespülte Kunststoff an die Rückspülöffnung abgegeben wird,
wobei bevorzugt laufend ein Betriebsparameter der Filtrierung während dem ersten Betriebszustand erfaßt und in Abhängigkeit des Wertes des erfaßten Parameters in den zweiten Betriebszustand umgeschaltet wird.
